Europäisches Patentamt

(19) European Patent Office

Office européen des brevets

(11) Publication number: **0 144 455**
**B1**

(12) **EUROPEAN PATENT SPECIFICATION**

(45) Date of publication of patent specification: **27.01.88**

(21) Application number: **83112216.3**

(22) Date of filing: **05.12.83**

(51) Int. Cl.⁴: **B 65 G 17/08**

(54) **Flat top conveyor belt.**

(43) Date of publication of application:
**19.06.85 Bulletin 85/25**

(45) Publication of the grant of the patent:
**27.01.88 Bulletin 88/04**

(84) Designated Contracting States:
**DE FR GB IT**

(56) References cited:
**EP-A-0 032 797**
**AU-B- 22 422**
**US-A-2 268 542**
**US-A-2 708 107**
**US-A-2 911 091**
**US-A-3 870 141**
**US-A-4 159 763**

(73) Proprietor: **The Laitram Corporation**
**220 Laitram Lane**
**Harahan Louisiana 70123 (US)**

(72) Inventor: **Lapeyre, James M.**
**13 Richmond Place**
**New Orleans Louisiana 70150 (US)**

(74) Representative: **Kraus, Walter, Dr. et al**
**Patentanwälte Kraus, Weisert & Partner**
**Thomas-Wimmer-Ring 15**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Field of the Invention

This invention relates to a modular conveyor belt composed of substantially identical injection molded modules, each of the modules comprising an integrally molded body having a flat conveying surface and a plurality of link ends of identical construction, said link ends each projecting beyond and spaced along opposite parallel edges of the body and in such a way that the link ends on the opposite edges of the body are end to end reversible, each link end possessing an upper surface coplanar and integral with the conveying surface, and an end portion extending downward from and integral with the surface, the link ends of one module being shaped to mate with the link ends of adjacent other modules independently of any pivot rod and being pivotally connected thereto by pivot rods passing through the link ends and extending across the width of the connected modules, the link ends having first structural portions integral with the body and being operative to substantially cover the pivot rods on the conveying side of the module.

Furthermore, the invention relates to a conveyor with such conveyor belt.

### Background of the Invention

Modular conveyor belts are known which comprise modules pivotally connected to one another, each module being molded as a single unit, preferably of a plastic material. Such conveyor belts are shown, for example, in US—A—3 870 141 and in US—A—4 051 949 of the same inventor and assignee as herein. For some purposes, as in the food industry, it is desirable that the conveyor be readily inspected to assure cleanliness. Government and industry regulations also specify standards of inspectability and cleanliness for equipment used in processing products for human consumption. An easily inspectable conveyor belt is shown in US—A—4 159 763 of The Laitram Corporation the assignee herein.

A modular conveyor belt of the type mentioned in the beginning is disclosed in US—A—3 870 141. Similar modular conveyor belts, the links of which, however, do not project in such a way that the module bodies are end to end• reversible are disclosed in AU—B—22 422 and US—A—2 911 091. The link ends of these known conveyor belts are formed so that they completely cover the pivot rods around their circumference and thus prevent easy inspection for assuring cleanliness as mentioned above.

### Summary of the Invention

In accordance with this invention, a conveyor belt of the type mentioned in the beginning is provided, which is characterized in that the end portion define a partial cylinder alligned on a pivot axis across the width of the body to permit the pivot rod to pass through said partial cylinders and mate the link ends to adjacent modules, said link ends having second structural portions cooperative with said first structural portion both to substantially expose that portion of the pivot rods coextensive with the link ends on the bottom of the module for inspection and cleaning and more uniform temperature cycling and to encircle a minor portion of the exposed pivot rods on the bottom of the module sufficient to provide pivotal bearing races, the end portion of each link end being substantially exposed to the conveying surface of the module for inspection and cleaning as the conveyor belt is carried over a curved course.

Thus, the present invention provides a modular conveyor belt with first and second structural portions that cover and expose the pivot, respectively. These structural portions are operative to cover the pivot rod on the top or conveying side of the module, rendering the side substantially flat an cleanable, the pivot rods remaining substantially exposed on the bottom or reverse side for inspection and cleaning. The rod is exposed to ambient temperature and is therefore more easily heated or cooled than a concealed pivot rod, such that temperature cycling, thermal expansion and contraction is more uniform for the modules and interconnecting rods.

Preferably longitudinal ribs are provided on the underside of the module body terminating at the link ends, these ribs having enclosed end portions circumscribing an opening centred on the pivot axis. Also transverse ribs can extend across the width of the module, and the longitudinal ribs can be spaced between the transverse ribs.

With the interconnected modules lying a straight path, the linkled ends are concealed, and the belt provides an effectively continuous conveying surface. Along a curved path, the linked ends are exposed for inspection and cleaning.

Sprocket recesses can be provided on each module by confronting surfaces of the transverse ribs and can be disposed midway between the pivot axes of the module. The sprocket recesses are adapted to mate with corresponding sprocket teeth of an associated sprocket wheel to provide a centrally driven conveyor module which exhibits minimal chordal action and scrubbing between the mating surfaces of the module and the sprocket wheel.

Further developments of the invention are defined in the dependent claims.

### Description of the Drawings

The invention will be more fully understood from the following detailed description taken in conjunction with the accompanying drawings, in which:

Fig. 1 is a pictorial view of the novel conveyor belt and associated sprocket drive;

Fig. 2 is a pictorial view of the bottom side of linked modules;

Fig. 3 is a top pictorial view of linked modules;

Fig. 4 is a partial bottom view of a module;

Fig. 5 is a partial end elevation view of a module;

Fig. 6 is a sectional elevation view taken along lines 6—6 of Fig. 4;

Fig. 7 is a top view of modules linked in brick-laid fashion;

Fig. 8 is a a cutaway side elevation view illustrating linked modules in engagement with a sprocket wheel;

Fig. 9 is an elevation view of a sprocket wheel employed with the linked modules; and

Fig. 10 is a sectional end view of the sprocket wheel of Fig. 9.

Detailed Description of the Invention

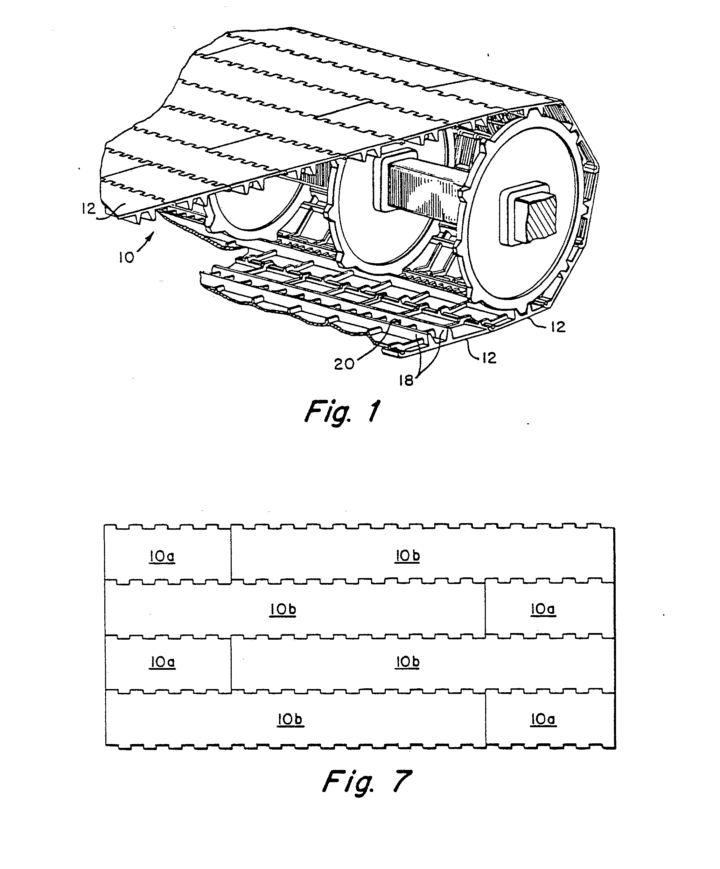

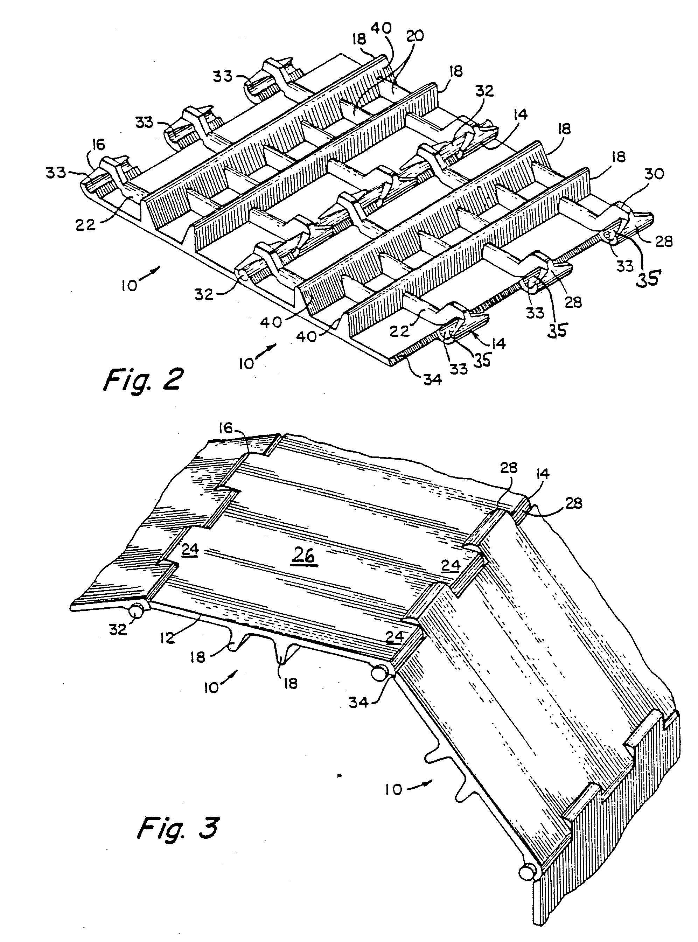

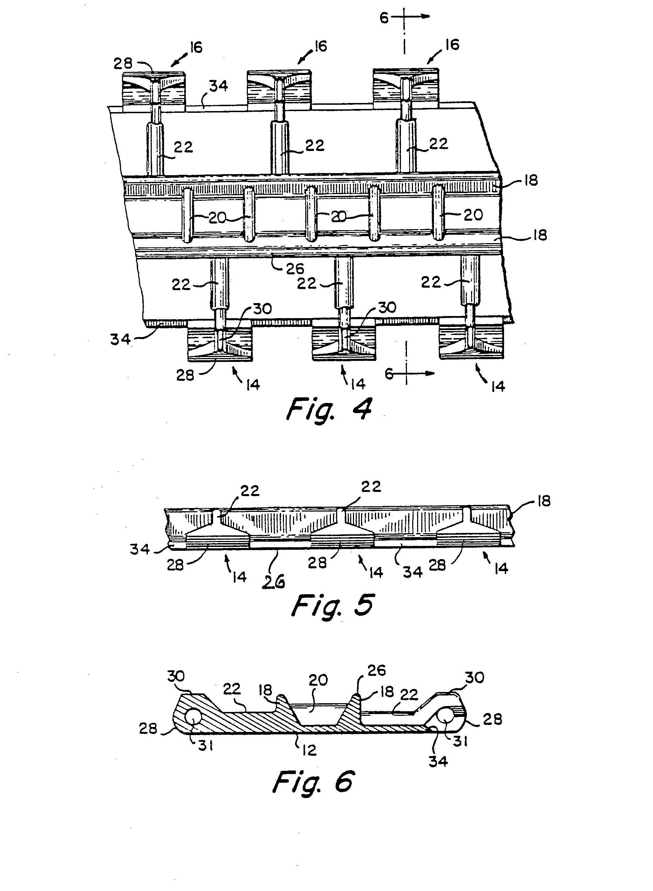

Referring to Figs. 1—6 of the drawing, there is shown a module 10 which is interconnected with like modules to produce a modular linked conveyor belt in accordance with the invention. Each module 10 is formed as an integral unitary structure of plastic material by well-known injection molding or other molding process. Each module includes a generally rectangular plate-like body 12 having a first plurallity of link ends 14 and a second plurality of longitudinally disposed ribs 20 are spaced between the transverse ribs 18. A plurality of longitudinal ribs 22 also extend from each transverse rib 18 toward and terminate at the respective links 6. A pair of tranverse ribs 18 extend across the width of the body, and a plurality of longitudinal link ends. Thre grid structure formed by the transverse ribs 18 and the interconnecting longitudinal ribs 20 and 22 serves to strengthen the module and to prevent any significant bending of the module about its longitudinal or transverse axes. The link ends 14 and 16 each have first structural portions 24 having upper surface portions (Fig. 3) coplanar with the upper conveyor surface 26 of the body 12, and an end portion 28 which downwardly extends from the surface and which defines a partially cylindrical segment. For each link end, the partially cylindrical segments are aligned about a common transverse axis which is the pivot axis of adjacent interconnected links. The longitudinal ribs 22 which terminate at each link end include enclosed end portions 30 which circumscribe a pivotal bore 31 therethrough which is in alignment with the pivot axis and through which a pivot rod 32 extends to interconnect mated axis. The pivot rods 32 are typically headed or otherwise deformed at their ends for axial retention in the module.

The end portions 28 each include a partial interior cylindrical surface or bore 33 which has a bearing surface 35 for the pivot rod 32 and which provides sufficient bearing surface area to accommodate the tensile forces produced by driving of the interconnected modules along a conveyor path under load. The edges 34 of the module which confront the link ends 28 of a mated module are bevelled to closely abut the rounded edges of the link ends 28, and to provide only a small gap between mated links and maintain a substantially continuous conveying surface when mated links are disposed along a straight path, as seen in Fig. 1. Preferably, the modules are of link end configuration to be end-to-end reversible; that is, either end of a module can mate with either end of any link module.

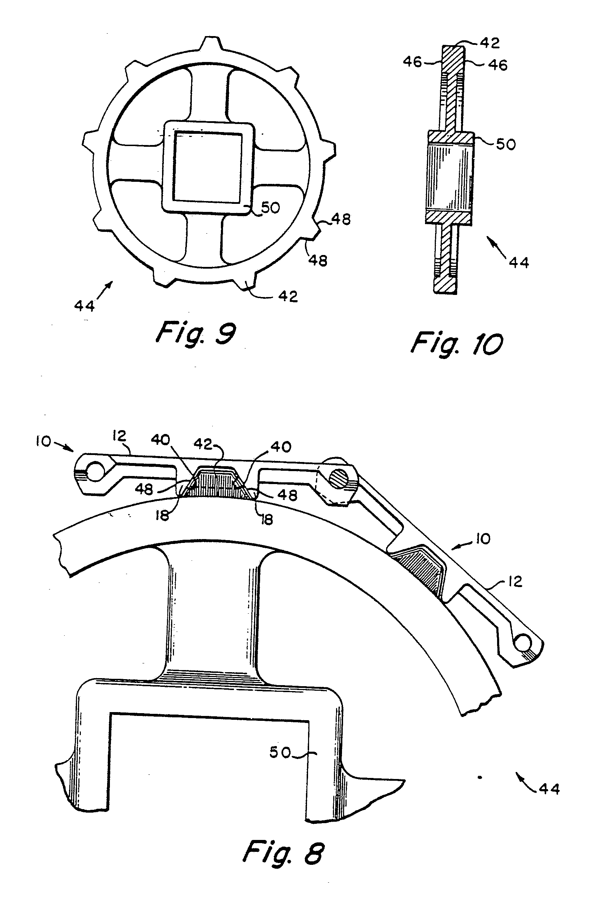

Along a straight path, the mated modules each have an upper conveying surface 26 which is substantially coplanar and continuous with that of adjacent links to provide effectively continuous and easily cleaned conveying surface with only a small parting line between adjacent modules. The pivot rod 32 joining adjacent modules is covered by the end portions 28. The pivot rod 32 is substantially exposed on the inner side of the links, as seen in Fig. 2, to provide visual access to the pivot rods and link ends for inspection and cleaning as required by industrial and governmental regulations, for example, in the food industry. The link ends and edges of each module are also exposed for ease of inspection when the belt is conveyed in a circular path around an associated sprocket, as shown in Figs. 3 and 8.

Confronting inclined surfaces 40 of the transverse ribs 18 define recesses which served as sprocket recesses located midway between the pivot axes of the module. These sprocket recesses are adapted to mate with corresponding sprocket teeth 42 of an associated sprocket wheel 44, as shown in Figs. 1 and 8. The sprocket wheel 44 is shown in Figs. 9 and 10 and has teeth 42 with parallel side surfaces 46 and inclined front and back surfaces 48 configured to engage the corresponding surfaces of the sprocket recesses. The sprocket wheel 44 has a hub 50 adapted to be secured to a square shaft. A sufficient plurality of sprocket wheels is employed across the width of the module to provide intended support and driving force, as shown in Fig. 1. The centrally driven sprocket recesses provide the benefits of minimizing chordal action and scrubbing between the mating surfaces of the module and the sprocket wheel.

The centrally disposed sprocket recesses can also be part of a module of different construction. The sprocket recesses can be considered as the inverse of center sprocket teeth. The placement of the sprocket recesses midway between the pivot axes, and the driving of the modules at this mid position, rather thasn driving the modules at the position of the pivot axes as is conventionally done, provide substantially constant speed drive of the conveyor belt, substantially eliminates sprocket-to-belt wear, and provides a belt capable of faster running speeds than conventional belts by reason of minimized chordal action and scrubbing. The confronting angled surfaces of the intermediate recesses also serves to present greater surface area to water and/or steam jets which can be located above and below the modules for cleaning of the belt. The angled sections also facilitate visual inspection of the belt.

The modules are preferably made in widths which are multiples of the smallest module width so that modules can be arranged in brick-laid fashion to provide a conveyor belt of any desired overall width. Referring to Fig. 7, the illustrated belt is composed of modules 10a of a small width, and modules 10b of a greater width which is triple the smaller width. The modules are staggered as shown such that laterally adjacent modules are straddled by a single module to achieve lateral interlocking of the belt. The modules may be easily cut to any intermediate widths such that belts of any width can be manufactured from a single standard part.

The modules are fabricated as an integral unitary structure by injection molding of a plastic material such as polyethylene. The particular material is determined in accordance with the characteristics desired to suit a particular operating environment. The pivot rods are typically of the same or compatible plastic material.

The invention is not to be limited except as indicated in the appended claims.

**Claims**

1. A modular conveyor belt composed of substantially identical injection molded modules (10, 10a, 10b), each of the modules (10, 10a, 10b) comprising an integrally molded body (12) having a flat conveying surface (26) and a plurality of link ends (14, 16) of identical construction, said link ends (14, 16) each projecting beyond and spaced along opposite parallel edges (34) of the body (12) and in such a way that the link ends (14, 16) on the opposite edges (34) of the body (12) are end to end reversible, each link end (14, 16) possessing an upper surface coplanar and integral with the conveying surface (26), and an end portion (28) extending downward from and integral with the surface, the link ends (14, 16) of one module (10, 10a, 10b) being shaped to mate with the link ends (14, 16) of adjacent other modules (10, 10a, 10b) independently of any pivot rod (32) and being pivotally connected thereto by pivot rods (32) passing through the link ends (14, 16) and extending across the width of the connected modules (10, 10a, 10b), the link ends (14, 16) having first structural portions (24) integral with the body (12) and being operative to substantially cover the pivot rods (32) on the conveying side of the module (10, 10a, 10c), characterized in that said end portions (28) define a partial cylinder (33) aligned on a pivot axis across the width of the body (12) to permit said pivot rods (32) to pass through said partical cylinders (33) and mate the link ends (14, 16) to adjacent modules (10, 10a, 10b), said link ends (14, 16) having second structural portions (30) cooperative with said first structural portions (24) both to substantially expose that portion of the pivot rods (32) coextensive with the link ends (14, 16) on the bottom of the module (10, 10a, 10b) for inspection and cleaning and more uniform temperature cycling and to encircle a minor portion of the exposed pivot rods (32) on the bottom of the module (10, 10a, 10b) sufficient to provide pivotal bearing races (31), the end portion (28) of each link end (14, 16) being substantially exposed to the conveying surface (26) of the module (10, 10a, 10b) for inspection and cleaning as the conveyor belt is carried over a curved course.

2. The conveyor belt of Claim 1, characterized in that the link ends (14, 16) each include a bearing surface (35) which bears on the pivot rod (32) and which provides sufficient bearing surface to accommodate the tensile forces produced by driving the interconnected modules (10, 10a, 10b) along a conveyor path.

3. The conveyor belt of Claim 1, characterized in that the cylindrical segments (33) being operative to cover a pivot rod (32) on the conveying side of the module (10, 10a, 10b);

the body (12) having bevelled edges (34) between the link ends (14, 16) which closely abut the link ends (14, 16) of connected modules (10, 10a, 10b);

a plurality of transverse ribs (18) extending across the width of the body (12) and disposed outward from the inner side of the body (12);

a plurality of first longitudinally disposed ribs (20) spaced between the transverse ribs (18); and

a plurality of second longitudinal ribs (22) extending from each transverse rib (18) toward the respective link ends (14, 16), each of the second longitudinal ribs (22) terminating at a respective link end (14, 16) in an enclosed end portion (28) which circumscribes a pivotal bore which is in alignment with the pivot axis.

4. The conveyor belt of Claim 3, characterized in that interconnected modules (10, 10a, 10b) lying along a straight path define an effectively continuous conveying surface.

5. The conveyor belt of Claim 3, characterized in that said conveying surface (26) is a surface of a plate-like portion of the integral body (12).

6. The conveyor belt of claim 3, characterized in that interconnected modules (10, 10a, 10b) lying along a straight path have the link ends (14, 16) and bevelled edges (34) concealed;

and said interconnected modules (10, 10a, 10b) lying along a curved path have the link edges (14, 16) and bevelled edges (34) exposed for inspection and cleaning.

7. The conveyor belt of Claim 3, characterized in that said transverse ribs (18) comprise a pair of transverse ribs (18) extending across the width of the body (12) and having confronting inclined surfaces (40) which define a sprocket recess located midway between the pivot axes of the modules (10, 10a, 10b).

8. The conveyor belt of Claim 3, characterized in that the inclined surfaces (40) are angularly inclined from the conveying surface (26) toward the pivot axis closest each rib (18).

9. The conveyor belt of Claim 3, characterized in that the cylindrical segments (33) of the link ends (14, 16) each include a cylindrical surface (35) adapted to bear on a pivot rod (32) retaining connected modules (10, 10a, 10b), the cylindrical surface (35) providing sufficient bearing surface area to accommoate the tensile forces produced by driving of the interconnected modules (10, 10a, 10b) along a conveyor path.

10. A conveyor, characterized by a conveyor belt of any one of Claims 1 to 9.

11. The conveyor of Claim 10, having a conveyor belt in accordance with Claim 7, characterized by at least one sprocket wheel (44) including sprocket teeth (42) which are complementary to and are able to mate with the sprocket recesses defined by the confronting inclined surfaces (40) of the transverse ribs (18) of the modules (10, 10a, 10b) such that the sprocket wheel (44) drives the conveyor belt.

12. The conveyor of Claim 11, characterized in the the hub (50) of said sprocket wheel (44) has a square opening to be secured to a square shaft.

**Patentansprüche**

1. Modularer Fördergurt, der aus im wesentlichen identischen spritzgegossenen Modulen (10, 10a, 10b) zusammengesetzt ist, wobei jedes der Module (10, 10a, 10b) einen integral geformten Körper (12), der eine flache Föderoberfläche (26) hat, und eine Mehrzahl von Verbindungsgliedenden (14, 16) von identischer Konstruktion umfaßt, wobei jedes der Verbindungsgliedenden (14, 16) über entgegengesetzte parallele Ränder (34) des Körpers (12) hinaus vorsteht und entlang derselben im Abstand sowie in einer solchen Weise angeordnet ist, daß die Verbindungsgliedenden (14, 16) auf den entgegengesetzten Rändern (34) des Körpers (12) endweise reversibel sind, wobei jedes Verbindungsgliedende (14, 16) eine obere Oberfläche besitzt, die koplanar und integral mit der Förderoberfläche (26) ist, und einen Endteil (28), der sich von der Oberfläche nach abwärts erstreckt und integral mit derselben ist, wobei die Verbindungsgliedenden (14, 16) von einem Modul (10, 10a, 10b) so geformt sind, daß sie mit den Verbindungsgliedenden (14, 16) von benachbarten anderen Modulen (10, 10a, 10b) unabhängig von irgendeinem Drehstab (32) in Eingriff stehen und mittels Drehstäben (32), die durch die Verbindungsgliedenden (14, 16) hindurchgehen und sich quer über die Breite der verbundenen Module (10, 10a, 10b) erstrecken, drehbar damit verbunden sind, wobei die Verbindungsgliedenden (14, 16) erste strukturelle Teile (24) haben, die integral mit dem Körper (12) und dahingehend wirksam sind, daß sie die Drehstäbe (32) auf der Förderseite des Moduls (10, 10a, 10b) im wesentlichen abdecken, dadurch gekennzeichnet, daß die Enteile (28) einen partiellen Zylinder (33) bilden, welche auf einer Drehachse quer über die Breite des Körpers (12) fluchten, so daß sie es dem Drehstab ermöglichen, durch die partiellen Zylinder (33) hindurchzugehen und die Verbindungsgliedenden (14, 16) mit benachbarten Modulen (10, 10a, 10b) zu vereinigen, wobei die Verbindungsgliedenden (14, 16) zweite strukturellen Teile (30) haben, die mit den ersten strukturelle Teilen (24) zusammenwirken, und zwar sowohl dazu, im wesentlichen denjenigen Teil der Drehstäbe (32), der koextensiv mit den Verbindungsgliedenden (14, 16) ist, auf der Unterseite des Moduls (10, 10a, 10b) zur Inspektion und Reinigung und gleichförmigerer Temperaturschwankung im wesentlichen freizulegen, und einen kleineren Teil der freigelegten Drehstäbe (32) auf der Unterseite des Moduls (10, 10a, 10b) genügend zu umfassen, um Drehlagergleitbahnen (31) zu bilden, wobei der Endteil (28) von jedem Verbindungsgliedende (14, 16) im wesentlichen nach der Förderoberfläche (26) ende (10, 10a, 10b) zu zer Inspection und Reinigung freiliegt, wenn der Fördergurt über eine gekrümmte Bahn getragen wird.

2. Fördergurt nach Anspruch 1, dadurch gekennzeichnet, daß jedes Verbindungsgliedende (14, 16) eine Lageroberfläche (35) aufweist, welche sich auf den Drehstab (32) stützt und welche genügend Lagerberofläche zur Aufnahme der Zugkräfte zur Verfügung stellt, die durch Antreiben der miteinander verbundenen Module (10, 10a, 10b) längs eines Förderwegs erzeugt werden.

3. Fördergurt nach Anspruch 1, dadurch gekennzeichnet, daß

die zylindrischen Segmente (33) dahingehend wirksam sind, daß sie einen Drehstab (32) auf der Förderseite des Moduls (10, 10a, 10b) abdecken;

der Körper (12) abgefaste Ränder (34) zwischen den Verbindungsgliedenden (14, 16) hat, welche eng an den Verbindungsgliedenden (14, 16) von verbundenen Modulen (10, 10a, 10b) anliegen;

eine Mehrzahl von querverlaufenden Rippen (18), die sich quer über die Breite des Körpers (12) erstrecken und auswärts von der inneren Seite des Körpers (12) angeordnet sind;

eine Mehrzahl von ersten längsverlaufend angeordneten Rippen (20), die im Abstand zwischen den querverlaufenden Rippen (18) angeordnet sind; und

eine Mehrzahl von zweiten längsverlaufenden Rippen (22), die sich von jeder querverlaufenden Rippe (18) nach den jeweiligen Verbindungsliedenden (14, 16) zu erstrecken, wobei jede der zweiten längsverlaufenden Rippen (22) an einem jeweiligen Verbindungsgliedende (14, 16) in einem geschlossenen Endteil (28) endet, welcher eine Drehbohrung (31) umschreibt, die sich in Fluchtung mit der Drehachse befindet.

4. Fördergurt nach Anspruch 3, dadurch gekennzeichnet, daß miteinander verbundene Module (10, 10a, 10b), die längs eines geraden Wegs liegen, eine effektiv kontinuierliche Förderoberfläche begrenzen.

5. Fördergurt nach Anspruch 3, dadurch gekennzeichnet, daß die Förderoberfläche (26) eine Oberfläche von einem plattenartigen Teil des integralen Körpers (12 ist).

6. Fördergurt nach Anspruch 3, dadurch gekennzeichnet, daß bei miteinander verbundenen Modulen (10, 10a, 10b), die längs eines geraden Wegs liegen, die Verbindungsgliedenden (14, 16) und die abgefasten Ränder (34) unauffällig sind;

und daß bei miteinander verbundenen Modulen (10, 10a, 10b), die längs eines gekrümmten Wegs liegen, die Verbindungsgliedenden (14, 16) und die abgefasten Ränder (34) zur Inspektion und Reinigung freiliegen.

7. Fördergurt nach Anspruch 3, dadurch gekennzeichnet, daß die querverlaufenden Rippen (18) ein Paar von querverlaufenden Rippen (18) umfassen, welche sich quer über die Breite des Körpers (12) erstrecken und gegenübergestellte, geneigte Oberflächen (40) haben, welche eine Kettenzahnradausnehmung begrenzen, die sich in der Mitte zwischen den Drehachsen des Moduls (10, 10a, 10b) befinden.

8. Fördergurt nach Anspruch 7, dadurch gekennzeichnet, daß die geneigten Oberflächen (40) von der Förderoberfläche (26) winklig nach der jeder Ripper (18) nächsten Drehachse zu geneigt sind.

9. Fördergurt nach Anspruch 3, dadurch gekennzeichnet, daß jedes der zylindrischen Segmente (33) der Verbindungsgliedenden (14, 16) eine zylindrische Oberfläche (35) aufweist, die dazu geeignet ist, sich auf einen Drehstab (32) zu stützen, der Module (10, 10a, 10b) verbunden halt, wobei die zylindrische Oberfläche (35) genügend Lageroberflächenbereich zur Aufnahme der Zugkräfte bildet, die durch Antrieb der miteinander verbunden Module (10, 10a, 10b) längs eines Förderwegs erzeugt werden.

10. Förderer, gekennzeichnet durch einem Fördergurt nach irgendeinem der Ansprüche 1 bis 9.

11. Förderer nach Anspruch 10, der einen Fördergurt gemäß Anspruch 7 hat, gekennzeichnet durch wenigstens ein Kettenzahnrad (44), das Kettenzahnradzähne (42) aufweist, die komplementär zu den Kettenzahnradausenhmungen sind und in der Lage sind, sich mit den Kettenzahnradausnehmungen zu vereinigen, welche durch die gegenüberstehenden geneigten Oberflächen (40) der querverlaufenden Rippen (18) der Module (10, 10a, 10b) begrenzt sind, und zwar derart, daß das Kettenzahnrad (44) den Fördergurt antreibt.

12. Förderer nach Anspruch 11, dadurch gekennzeichnet, daß die Nabe (50) des Kettenzahnrads (44) eine quadratische Öffnung hat, die an einer quadratischen Welle befestigen ist.

## Revendications

1. Courroie transporteuse modulaire composée de modules moulés par injection (10, 10a, 10b) sensiblement identiques, chacun des modules (10, 10a, 10b) comprenant un corps (12) moulé en une seule pièce qui présente une surface transporteuse plate (26) et une pluralité d'extrémités de maillons (14, 16) de construction identique, lesdites extrémités de maillons (14, 16) faisant saillie au-delà des bords parallèles opposés (34) du corps (12) et étant espacées sur la longueur de ces bords, et da telle manière que les extrémités de maillons (14, 16) des deux bords opposés (34) du corps (12) soient réversibles, chaque extrémité de maillon (14, 16) possédant une surface supérieure située dans le même plan que la surface transporteuse (26) et d'un seul tenant avec cette surface, et une partie terminale (28) qui s'e'tend vers le bas à partir de cette surface et qui est d'un seul tenant avec cette surface, les extrémités de maillons (14, 16) d'un module (10, 10a, 10b) étant de configuration appropriée pour s'accoupler aux extrémités de maillons (14, 16) d'autres modules (10, 10a, 10b) adjacents, indépendamment de toute broche d'articulation (32) et y étant articulées par des broches d'articulation (32) qui passent à travers les extrémités de maillons (14, 16) et s'étendent sur la largeur des modules (10, 10a, 10b) assemblés, les extrémités de maillons (14, 16) possédant des premières parties de structure (24) qui sont d'un seul tenant avec le corps (12) et ont pour effet de recouvrir à peu près totalement les broches d'articulation (32) sur la face transporteuse du module (10, 10a, 10b), caractérisée en ce que lesdites parties terminales (28) définissent un cylindre partiel (33) centré sur un axe d'articulation selon la largeur du corps (12), pour permettre à ladite broche d'articulation (32) de passer à travers lesdits cylindres partiels (33) et d'accoupler les extrémités de maillons (14, 16) à des modules (10, 10a, 10b) adjacents, lesdites extrémités de maillons (14, 16) possédant des deuxièmes parties de structure (30) qui coopèrent avec lesdites premières parties de structure (24), d'une part, pour laisser sensiblement visible la partie des broches d'articulation (32) qui s'étend sur la largeur des extrémités de maillons (14, 16) sur la face inférieure du module (10, 10a, 10b), de manière à permettre l'inspection et le nettoyage et à permettre d'obtenir des cycles de température plus uniformes, et d'autre part, pour encercler une petite partie des broches d'articulation (32) laissée visible sur la face inférieure du module (10, 10a, 10b) dans une mesure suffisante pour former des colliers de paliers d'articulation (31), la partie terminale (28) de chaque extrémité de maillon (14, 16) étant sensiblement visible au niveau de la surface transporteuse (26) du module (10, 10a, 10b) pour permettre l'inspection et le nettoyage lorsque la courroie transporteuse passe dans une partie coubre du trajet.

2. Courroie transporteuse selon la revendication 1, caractérisée en ce que chacune des extrémités de maillons (14, 16) comprend une surface de portée (35) qui porte sur la broche d'articulation (32) et qui forme et surface de portée suffisante pour absorber les forces de traction produites par l'entraînement des modules (10, 10a, 10b) assemblés le long d'un trajet de transporteur.

3. Courroie transporteuse selon la revendication 1, caractérisée en ce que les segments cylindriques (33) recouvrent le broche d'articulation (32) sur la face transporteuse de module (10, 10a, 10b);

ledit corps (12) présentant des bords chanfreinés (34) entre les extrémités de maillons (14 16), ces bords s'appuyant étroitement contre les extrémités de maillons (14, 16)´des modules (10, 10a, 10b) assemblés;

une pluralité de nervures transversales (18) qui s'étendent sur la largeur du corps (12) et sont disposées en faisant saillie sur la face interne du corps (12);

une pluralité de premières nervures (20) disposées longitudinalement, espacées entre les nervures transversales (18); et

une pluralité de deuxièmes nervures longitudinales (22) et qui s'étendent de chaque nervure transversale (18) vers l'extrémité de maillon (14, 16) correspondante, chacune des deuxièmes nervures longitudinales (22) se terminant au droit d'une extrémite de maillon (14, 16) correspondante, dans une partie terminale fermée (28) qui entoure un trou d'articulation (31) qui est centré sur l'axe d'articulation.

4. Courroie transporteuse selon la revendication 3, caractérisée en ce que des modules (10, 10a, 10b) assemblés qui s'étendent le long d'une partie rectiligne du trajet définissent une surface transporteuse effectivement continue.

5. Courroie transporteuse selon la revendication 3, caractérisée en ce que ladite surface transporteuse (26) est une surface d'une partie en forme de plaque du corps (12) d'un seul tenant.

6. Courroie transporteuse selon la revendication 3, caractérisée en ce que les modules (10, 10a, 10b) assemblés qui sont contenus dans une partie rectiligne du trajet ont leurs extrémités de maillons (14, 16) et leurs bords chanfreinés cachés;

et lesdits modules (10, 10a, 10b) assemblés qui se trouvent dans une partie courbe du trajet ont leurs extrémités de maillons (14, 16) et leurs bords chanfreinés (34) visibles pour l'inspection et le nettoyage.

7. Courroie transporteuse selon la revendication 3, caractérisée en ce que lesdites nervures transversales (18) comprennent deux nervures transversales (18) s'étendant selon la largeur du corps (12) et qui possèdent des surfaces inclinées opposées (40) qui définissent un creux de denture situé à mi-distance entre les axes d'articulation du module (10, 10a, 10b).

8. Courroie transporteuse selon la revendication 7, caractérisée en ce que les surfaces inclinées (40) sont inclinées de la surface transporteuse (26) vers l'axe d'articulation le plus rapproché de chaque nervure (18).

9. Courroie transporteuse selon la revendication 3, caractérisée en ce que les segments cylindriques (33) des extrémités de maillons (14, 16) comprennent chacune une surface, cylindrique (35) adaptée pour porter sur une broche d'articulation (32) qui retient les modules (10, 10a, 10b) assemblés, la surface cylindrique (35) formant une surface de portée suffisante pour absorber les forces de traction produites par l'entraînement des modules (10, 10a, 10b) assemblés le long d'un trajet du transporteur.

10. Transporteur caractérisé par une courroie transporteuse selon l'une quelconque des revendications 1 à 9.

11. Transporteur selon la revendication 10, possédant une courroie transporteuse selon la revendication 7, caractérisé par au moins une roue denté (44) présentant des dents (42) qui sont complémentaires des creux de denture définis par les surfaces inclinées opposées (40) des nervures transversales (18) des modules (10, 10a, 10b) et qui sont capables de s'accoupler à ces creux de denture de telle manière que la roue dentée (44) entraîne la courroie transporteuse.

12. Transporteur selon la revendication 11, caractérisé en ce que le moyeu (50) de ladite roue dentée (44) présente une ouverture carrée de façon à se monter sur un arbre carré.

*Fig. 1*

*Fig. 7*

0 144 455

Fig. 2

Fig. 3

2

Fig. 4

Fig. 5

Fig. 6

Fig. 9

Fig. 10

Fig. 8